# EUROPEAN PATENT APPLICATION

(11) **EP 4 449 880 A1**
(43) Date of publication of application: **23.10.2024**
(21) Application number: 22907119.6
(22) Date of filing: 16.11.2022
(51) Int. Cl.: A23L 5/30, A23P 30/00

(54) **FOOD PROCESSING DEVICE AND OPERATION METHOD OF FOOD PROCESSING DEVICE**

(30) Priority: 13.12.2021 JP 2021202072
(71) Applicant: Panasonic Intellectual Property Management Co., Ltd., Osaka-shi, Osaka 540-6207 (JP)
(72) Inventor: UKAI, Kunihiro, Kadoma-shi, Osaka 571-0057 (JP); YAMAJI, Satoru, Kadoma-shi, Osaka 571-0057 (JP); HASHIMOTO, Yasuhiro, Kadoma-shi, Osaka 571-0057 (JP); INO, Daisuke, Kadoma-shi, Osaka 571-0057 (JP); TATSUMI, Hironori, Kadoma-shi, Osaka 571-0057 (JP)
(74) Representative: Grünecker Patent- und Rechtsanwälte PartG mbB
(86) International application number: PCT/JP2022/042584
(87) International publication number: WO 2023/112588

(57) **Abstract**

A food processing apparatus includes a reaction vessel (1) that has a tubular shape with a bottom and contains a reactant (13a) that is liquid and to be used for food, a reactor (for example, a reaction pipe (7)) that is disposed in the reaction vessel (1) and provided with a photocatalyst, a light source (8) that irradiates the photocatalyst with light, a cooler (10) that cools the reactant (13a) in the reaction vessel (1), a lid (5) that closes an opening of the reaction vessel (1), and a gas supplier (for example, a gas container (14)) that supplies an oxygen-containing gas into the reaction vessel via a first through-hole (5a) formed in the lid (5) or in a part of a side wall portion of the reaction vessel (1) in a vicinity of the lid (5). An inside of the reaction vessel (1) is controllably gastight.

## Description

### Technical Field

The present disclosure relates to a food processing apparatus and a method of operating a food processing apparatus.

### Background Art

PTL 1 discloses a sterilizer that kills microbes in a brewed product at room temperature without heating the product by using a photocatalyst.

### Citation List

### Patent Literature

PTL 1: Japanese Unexamined Patent Application Publication No. 2003-250514

### Summary of Invention

However, the sterilizer of PTL 1 has room for improvement when it is to be used to reform a food material. For example, there is a case where it is difficult for the sterilizer of PTL 1 to effectively reform a food material.

The present disclosure provides a food processing apparatus and a method of operating a food processing apparatus that can effectively reform a food material by using a photocatalyst.

A food processing apparatus according to an aspect of the present disclosure includes a reaction vessel that has a tubular shape with a bottom and contains a reactant that is liquid and to be used for food, a reactor that is disposed in the reaction vessel and provided with a photocatalyst, a light source that irradiates the photocatalyst with light, a cooler that cools the reactant in the reaction vessel, a lid that closes an opening of the reaction vessel, and a gas supplier that supplies an oxygen-containing gas into the reaction vessel via a first through-hole formed in the lid or in a part of a side wall portion of the reaction vessel in a vicinity of the lid, wherein an inside of the reaction vessel is controllably gastight.

It should be noted that this general or specific aspect may be implemented as a system, a method, an integrated circuit, a computer program, a computer-readable non-transitory storage medium, or any selective combination of an apparatus, a system, a method, an integrated circuit, a computer program, and a computer-readable non-transitory storage medium. Examples of a computer-readable non-transitory recording medium include a non-volatile recording medium such as a compact disc read-only memory (CD-ROM).

A food processing apparatus according to an aspect of the present disclosure and a method of operating a food processing apparatus can effectively reform a food material.

### Brief Description of Drawings

[Fig. 1] Fig. 1 is a sectional view of a food processing apparatus according to a first embodiment.
[Fig. 2] Fig. 2 is a plan view of the food processing apparatus according to the first embodiment.
[Fig. 3] Fig. 3 is a sectional view of a catalytic reactor according to the first embodiment.
[Fig. 4] Fig. 4 is a flowchart of a method of operating the food processing apparatus according to the first embodiment.
[Fig. 5] Fig. 5 is a sectional view of a food processing apparatus according to a second embodiment.
[Fig. 6] Fig. 6 is a flowchart of a method of operating the food processing apparatus according to the second embodiment.
[Fig. 7] Fig. 7 is a sectional view of a food processing apparatus according to a third embodiment.

### Description of Embodiments

### (Underlying Knowledge Forming Basis of the Present Disclosure)

In food production, it is widespread practice to reform a food material in order to improve production efficiency or to enable the material to contain a larger amount of nutrients.

Examples of a method of reforming a food material include a method using a catalyst. For example, in margarine production, a nickel catalyst is used to hydrogenate a fat component as a material. Using an immobilized enzyme in food production can be also regarded as a use of a catalyst.

Apart from the viewpoint of reforming a food material, a catalyst may be used for sterilization in a food production process. For example, PTL 1 discloses a sterilizer that kills microbes in a brewed product at room temperature without heating the product by using a photocatalyst.

When such a sterilizer, which uses a photocatalyst for sterilization, is used to reform a food material, it is difficult to effectively reform the food material.

In particular, to produce food by using a photocatalyst, it is necessary to perform an operation at a temperature lower than or equal to room temperature in view of suppressing degradation of the food. In this case, condensation occurs in the reaction vessel because a food material in the reaction vessel is cooled. As a result, the amount of a reaction liquid, which is composed of the material and water, increases, and this may affect reactivity. If flow of air into the reaction vessel from the outside of the food processing apparatus (hereafter, air outside of the food processing apparatus will be referred to as "outside gas") is suppressed in order to suppress condensation, oxygen necessary for the photocatalyst reaction may become insufficient. In this way, there is a trade-of between suppression of condensation in the reaction vessel and reliable supply of oxygen, and it is difficult to balance between these. That is, catalyst reactivity may become unbalanced in a low-temperature operation of a food processing apparatus including a photocatalyst, and the food processing apparatus has room for improvement to achieve appropriate food production.

The present disclosure provides a food processing apparatus and a method of operating a food processing apparatus that can suppress condensation and oxygen shortage in a reaction vessel when reforming of a food material is performed in the reaction vessel at a low temperature by using a photocatalyst.

A food processing apparatus according to an aspect of the present disclosure includes a reaction vessel that has a tubular shape with a bottom and contains a reactant that is liquid and to be used for food, a reactor that is disposed in the reaction vessel and provided with a photocatalyst, a light source that irradiates the photocatalyst with light, a cooler that cools the reactant in the reaction vessel, a lid that closes an opening of the reaction vessel, and a gas supplier that supplies an oxygen-containing gas into the reaction vessel via a first through-hole formed in the lid or in a part of a side wall portion of the reaction vessel in a vicinity of the lid, wherein an inside of the reaction vessel is controllably gastight. Here, "reaction vessel that has a tubular shape with a bottom" refers to reaction vessel that has a tubular shape whose bottom is closed. Hereafter "reactant that is liquid and to be used for food" may be also referred to as "reaction liquid".

With this apparatus, since the opening of the reaction vessel is closed by the lid and the inside of the reaction vessel is controllably gastight, it is possible to suppress condensation due to outside gas flowed into the reaction vessel. Moreover, since the oxygen-containing gas is supplied into the reaction vessel by the gas supplier, it is possible to reliably provide oxygen necessary for a reforming reaction of a material. Since the gas is supplied into the reaction vessel through the first through-hole formed in the lid or a part of the side wall portion of the reaction vessel in the vicinity of the lid, it is possible to supply the gas to a space that is present above the reaction liquid in the reaction vessel. Accordingly, it is possible to suppress foaming that occurs at the liquid surface of the reaction liquid further than in a case where the gas is supplied into the reaction liquid, and it is possible to suppress adhesion of the reaction liquid to the lid and the like. Here, "a part of the side wall portion of the reaction vessel in a vicinity of the lid" refers to a position where a space formed between the lid and the liquid surface of the reactant is present when the reactant is contained in the reaction vessel.

For example, in the food processing apparatus according to the aspect of the present disclosure, the gas supplier may include a gas container that communicates with the reaction vessel via the first through-hole.

In this case, since the gas is supplied from the gas container communicating with the reaction vessel, it is possible to reliably provide oxygen necessary for the reforming reaction of the material. Moreover, since the gas that flows into the reaction vessel can be limited to the gas in the gas container, it is possible to suppress condensation in the reaction vessel further than in a case where the opening of the reaction vessel is not closed by the lid.

For example, in the food processing apparatus according to the aspect of the present disclosure, the gas supplier may further include a communication pipe that is inserted into the first through-hole and through which the gas container and the reaction vessel communicate.

In this case, since the gas container communicates with the reaction vessel via the communication pipe, it is possible to replace the gas container easily. Accordingly, it is possible to change the capacity of the gas container in accordance with the type of the reaction liquid and the light irradiation time (reaction time), and it is possible to improve the versatility of the food processing apparatus.

For example, in the food processing apparatus according to the aspect of the present disclosure, the gas supplier may further include a valve that is provided in the communication pipe.

In this case, since the valve is provided in the communication pipe, it is possible to adjust the flow rate of the gas in the communication pipe. As a result, even when a high-pressure gas is contained in the gas container, it is possible to adjust the amount of the gas supplied from the gas container to the reaction vessel, and it is possible to suppress condensation in the reaction vessel.

For example, in the food processing apparatus according to the aspect of the present disclosure, the gas supplier may include an air pump that supplies the gas into the reaction vessel via the first through-hole, and the food processing apparatus may further include a gas discharger that is capable of discharging a gas in the reaction vessel via a second through-hole formed in the lid or in the side wall portion of the reaction vessel.

In this case, since the gas is supplied from the air pump to the reaction vessel, it is possible to reliably provide oxygen necessary for the reforming reaction of the material. Moreover, since it is possible to control the gas that flows into the reaction vessel by using the air pump, it is possible to suppress condensation in the reaction vessel further than in a case where the opening of the reaction vessel is not closed by the lid.

For example, in the food processing apparatus according to the aspect of the present disclosure, the air pump may maintain a gas pressure in a space in the reaction vessel to be higher than an atmospheric pressure by supplying the gas into the reaction vessel.

In this case, since the inside of the reaction vessel is set to a positive pressure, it is possible to suppress flow of outside gas into the reaction vessel, and it is possible to suppress condensation in the reaction vessel.

For example, in the food processing apparatus according to the aspect of the present disclosure, the gas discharger may include a check valve that restricts flow or air into the reaction vessel.

In this case, since the check valve is included in the gas discharger, it is possible to easily set the inside of the reaction vessel to a positive pressure.

For example, the food processing apparatus according to the aspect of the present disclosure may further include a dehumidifier that dehumidifies the gas supplied from the air pump.

In this case, since the gas supplied from the air pump is dehumidified, it is possible to considerably suppress condensation in the reaction vessel.

For example, the food processing apparatus according to the aspect of the present disclosure may further include a temperature adjuster that adjusts a temperature of the gas supplied by the air pump.

In this case, since the temperature of the gas supplied from the air pump is adjusted, it is possible to suppress a change in the temperature of the reaction liquid due to the gas supplied from the air pump.

For example, in the food processing apparatus according to the aspect of the present disclosure, an amount of the gas supplied by the air pump into the reaction vessel may coincide with an amount that is predetermined based on a time for which irradiation with light is performed by the light source.

In this case, the amount of the gas that is supplied into the reaction vessel by the air pump coincides with the predetermined amount based on the time for which irradiation with light is performed. Accordingly, since an amount of the gas that contains an amount of oxygen necessary for the reforming reaction of the material that progresses by irradiation of the photocatalyst with light is used as the predetermined amount, it is possible supply oxygen in the amount necessary for reforming of the material into the reaction vessel. Moreover, supply of excessive gas into the reaction vessel is suppressed, and it is also possible to suppress condensation in the reaction vessel.

For example, in the food processing apparatus according to the aspect of the present disclosure, a flow rate of the gas supplied by the air pump into the reaction vessel may be constant.

In this case, it is possible to supply the gas with a constant flow rate into the reaction vessel in accordance with the rate at which oxygen dissolves into the reaction liquid via the gas-liquid interface. Accordingly, supply of excessive gas into the reaction vessel is suppressed, and it is possible to suppress condensation in the reaction vessel.

For example, the food processing apparatus according to the aspect of the present disclosure may further include a controller that controls the air pump and a dissolved oxygen meter that measures a dissolved oxygen concentration in the reaction liquid, and the controller may cause the air pump to supply the gas so that the dissolved oxygen concentration measured by the dissolved oxygen meter exceeds a predetermined dissolved oxygen concentration.

In this case, since the air pump is controlled so that the dissolved oxygen concentration exceeds the predetermined dissolved oxygen concentration, it is possible to suppress shortage of dissolved oxygen in the reaction liquid necessary for reforming of the material.

For example, the food processing apparatus according to the aspect of the present disclosure may further include a controller that controls the air pump and an oxygen concentration meter that measures an oxygen concentration in a space in the reaction vessel, and the controller may cause the air pump to supply the gas so that the oxygen concentration measured by the oxygen concentration meter exceeds a predetermined oxygen concentration.

In this case, since the air pump is controlled so that the oxygen concentration in the space in the reaction vessel exceeds the predetermined oxygen concentration, it is possible to suppress shortage of oxygen in the space in the reaction vessel, and it is also possible to suppress shortage of dissolved oxygen in the reaction liquid.

For example, the food processing apparatus according to the aspect of the present disclosure may further include a liquid-surface sensor that is provided in the reaction vessel and detects a height of a liquid surface of the reactant, and the air pump may supply the gas into the reaction vessel when the height of the liquid surface detected by the liquid-surface sensor exceeds a predetermined liquid surface height.

In this case, the gas is supplied into the reaction vessel when the height of the liquid surface exceeds the predetermined liquid surface height. Accordingly, when it is highly probable that shortage of oxygen occurs due to decrease of the space in the reaction vessel, it is possible to effectively supply the gas into the reaction vessel.

For example, in the food processing apparatus according to the aspect of the present disclosure, the air pump may stop supply of the gas when emission of light by the light source is stopped.

In this case, it is possible to stop supply of the gas when emission of light is stopped. Accordingly, it is possible to suppress unnecessary supply of the gas.

For example, the food processing apparatus according to the aspect of the present disclosure may further include a space maintainer that maintains a space in the reaction vessel by adjusting an amount of the reaction liquid in the reaction vessel.

In this case, since the space in the reaction vessel is maintained, even when condensation in the reaction vessel increases due to deterioration of the sealing performance or the like, it is possible to reliably form the space in the reaction vessel, and it is possible to suppress shortage of dissolved oxygen in the reaction liquid necessary for reforming of the material.

For example, in the food processing apparatus according to the aspect of the present disclosure, the space maintainer may include a liquid-surface sensor that is provided in the reaction vessel and detects a height of a liquid surface of the reaction liquid, a liquid discharger that discharges the reaction liquid in the reaction vessel, and a controller that controls the liquid discharger; and the controller may cause the liquid discharger to discharge the reaction liquid so that the height of the liquid surface detected by the liquid-surface sensor does not exceed a predetermined upper limit height.

In this case, it is possible to actively control the liquid discharger so that the reaction liquid is discharged in accordance with the height of the liquid surface detected by the liquid-surface sensor.

For example, in the food processing apparatus according to the aspect of the present disclosure, the space maintainer may include a drain that is provided at a height of the side wall portion of the reaction vessel corresponding to an upper limit height of a liquid surface of the reaction liquid and discharges the reaction liquid exceeding the upper limit height.

In this case, since the drain is provided at a height corresponding to the upper limit height of the liquid surface of the reaction liquid, it is possible to discharge the reaction liquid exceeding the upper limit height to the outside of the reaction vessel without performing active control.

A method of operating a food processing apparatus according to an aspect of the present disclosure is a method of operating a food processing apparatus including a reaction vessel that has a tubular shape with a bottom and contains a reaction liquid including a material of food, a reaction pipe that is disposed in the reaction vessel and on an outer surface of which a photocatalyst is provided, a light source that irradiates the photocatalyst with light from an inside of the reaction pipe, a cooler that cools the reaction liquid in the reaction vessel, a lid that closes an opening of the reaction vessel, and a gas supplier that supplies an oxygen-containing gas into the reaction vessel via a first through-hole formed in the lid or in a side wall portion of the reaction vessel, wherein an inside of the reaction vessel is controllably gastight. The method includes causing the gas supplier to supply the gas into the reaction vessel when the photocatalyst is irradiated with light by the light source.

In this case, it is possible to obtain advantageous effects similar to those of the food processing apparatus described above.

Hereafter, such a food processing apparatus and a method of operating a food processing apparatus will be described based on embodiments with reference to the drawings.

The embodiments described below each illustrate a general or specific example. Thus, shapes, materials, elements, dispositions of the elements, and connections between the elements in the following description are examples, and are not intended to limit the present disclosure. Descriptions of elements denoted by the same numerals in the figures may be omitted. The figures illustrate elements schematically for ease of understanding, and may not show the correct shapes, dimension ratios, and the like of the elements.

### (First Embodiment)

### [1-1. Configuration of Food Processing Apparatus 100]

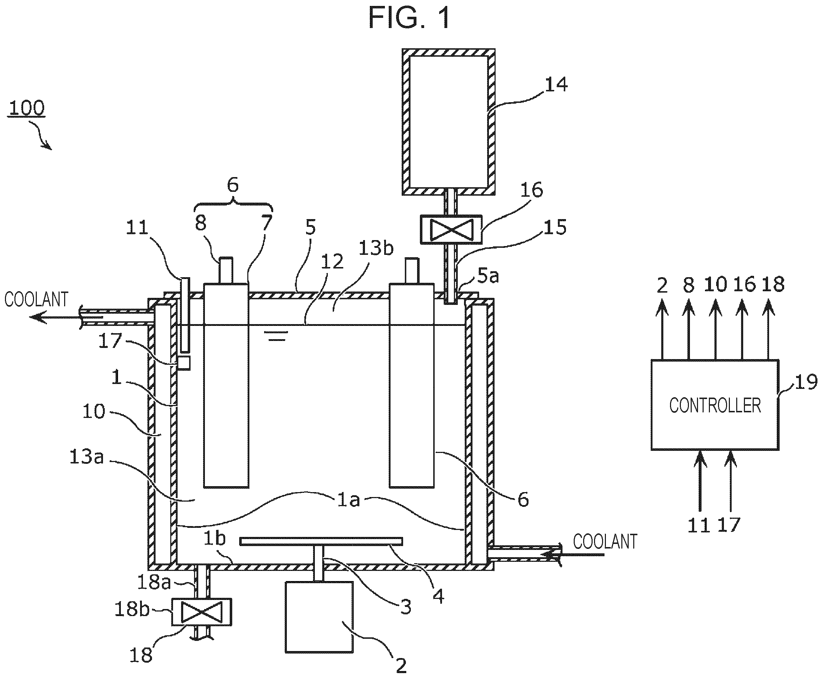

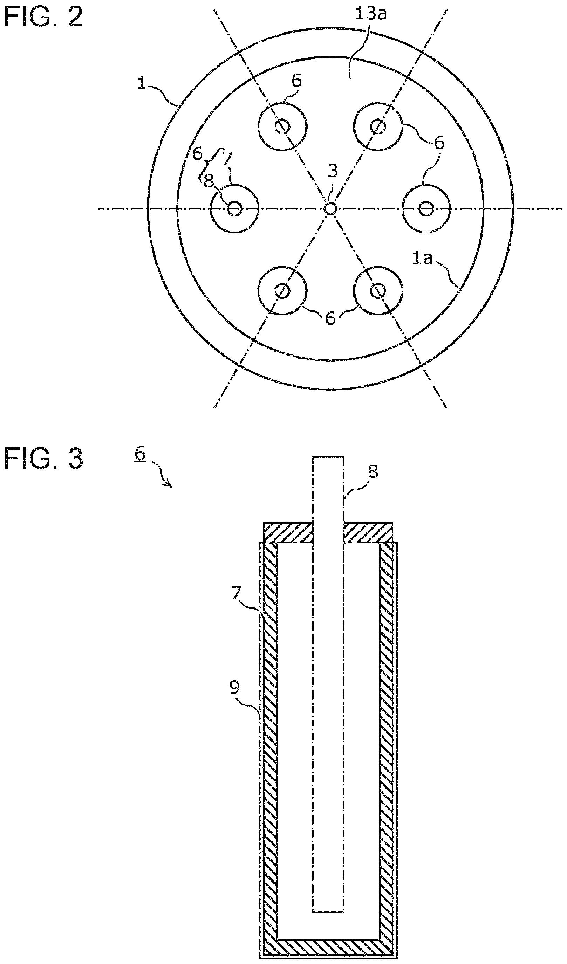

First, the configuration of a food processing apparatus 100 according to a first embodiment will be described with reference to Figs. 1 to 3. Fig. 1 is a sectional view of the food processing apparatus 100 according to the present embodiment. Fig. 2 is a plan view of the food processing apparatus 100 according to the present embodiment. Fig. 3 is a sectional view of a catalytic reactor 6 according to the present embodiment.

As illustrated in Fig. 1, the food processing apparatus 100 includes a reaction vessel 1, a stirrer 2, a lid 5, catalytic reactors 6, a cooler 10, a liquid-surface sensor 11, a gas container 14, a communication pipe 15, an on-off valve 16, a temperature sensor 17, a liquid discharger 18, and a controller 19. Hereafter, the elements of the food processing apparatus 100 will be described in order.

The reaction vessel 1 is a container that has a tubular shape with a bottom and contains a reaction liquid 13a including a food material. In the present embodiment, the reaction vessel 1 has a cylindrical shape and is composed of a side wall portion 1a and a bottom portion 1b. When the reaction liquid 13a is contained the reaction vessel 1, a space 13b, which is filled with a gas, is formed in an upper part of the reaction vessel 1. The boundary surface between the reaction liquid 13a and the space 13b will be referred to as "liquid surface" or "gas-liquid interface 12".

The stirrer 2 can stir the reaction liquid 13a in the reaction vessel 1. The stirrer 2 includes a rotation shaft 3 and an impeller 4.

The rotation shaft 3 is rotatably supported and extends through the bottom portion 1b of the reaction vessel 1. The rotation shaft 3 is rotated by a power source (not shown). In the present embodiment, since the reaction vessel 1 has a cylindrical shape, the rotation shaft 3 is set so as to coincide with the cylinder axis of the reaction vessel 1.

The impeller 4 is disposed in the reaction vessel 1. The impeller 4 is attached to the rotation shaft 3, and rotates together with the rotation shaft 3. An inclined-paddle impeller can be used as the impeller 4. However, the impeller 4 is not limited to an inclined-paddle impeller. Regarding the shape of the impeller 4, an optimal shape may be selected based on the viscosity of the reaction liquid 13a, the power source of the stirrer 2, and the like. For example, a propeller, a disk turbine impeller, or a centrifugal impeller may be used as the impeller 4.

The position of the stirrer 2 and the number of stirrers 2 are not limited to the aforementioned position and number. For example, the stirrer 2 may be set at the lid 5 or the side wall portion 1a. More than one stirrer 2 may be included in the food processing apparatus 100. The stirrer 2 is an optional element, and may be omitted.

The lid 5 closes the opening of the reaction vessel 1. To be specific, the lid 5 is connected to an end portion of the side wall portion 1a. The gap between the lid 5 and the end portion of the side wall portion 1a is sealed with a sealing member (not shown) in order to keep the gastightness of the space 13b in the reaction vessel 1. For example, a rubber O-ring or the like can be used as the sealing member.

The catalytic reactors 6 are set at the lid 5 and disposed in the reaction vessel 1. The catalytic reactors 6 are disposed with spaces therebetween so that the reaction liquid 13a can pass through the spaces. In the present embodiment, as illustrated in Fig. 2, in a plan view, six catalytic reactors 6 are arranged with the rotation shaft 3 of the stirrer 2 at the center.

As illustrated in Fig. 3, each catalytic reactor 6 includes a reaction pipe 7 and a light source 8. The reaction pipe 7 is a glass structure having a cylindrical shape with a bottom. The reaction pipe 7 is inserted into a through-hole formed in the lid 5. The gap between an outer surface of the reaction pipe 7 and the lid 5 is sealed with a sealing member to keep the gastightness of the space 13b in the reaction vessel 1. A thin-film layer 9 of a photocatalyst is provided on the outer surface of the reaction pipe 7. In the present embodiment, the thin-film layer 9 of the photocatalyst is made of titanium oxide (TiO₂).

The thin-film layer 9 can be formed, for example, by using a general sol-gel process. First, a sol-gel liquid is applied to the outer surface of the reaction pipe 7. Subsequently, the reaction pipe 7, to which the sol-gel liquid has been applied, is rotated by a motor. Thus, the sol-gel liquid is uniformly applied over the entirety of the outer surface of the reaction pipe 7. After the sol-gel liquid has been dried, the reaction pipe 7, to which the sol-gel liquid has been applied, is heated at a high temperature in an electric furnace. As a result, the thin-film layer 9 of the photocatalyst is fired on the outer surface of the reaction pipe 7.

The light source 8 can irradiate the thin-film layer 9 of the photocatalyst from the inside of the reaction pipe 7. The light source 8 is disposed inside of the reaction pipe 7 so as to face the thin-film layer 9 of the photocatalyst. Thus, the light source 8 can effectively irradiate the thin-film layer 9 of the photocatalyst with light. As the light source 8, for example, a high-pressure mercury lamp, a fluorescent lamp, a light emitting diode (LED), or the like can be used. The center wavelength of light emitted from the light source 8 is included in a wavelength range of 260 nm to 400 nm. Thus, excitons can be effectively generated in the photocatalyst. In the present embodiment, a fluorescent lamp that can emit light whose center wavelength is included in an ultra-violet wavelength range of 315 nm to 400 nm (UV-A) is used as the light source 8.

The cooler 10 can cool the reaction liquid 13a in the reaction vessel 1. In the present embodiment, the cooler 10 can cool the reaction liquid 13a in the reaction vessel 1 from the side wall portion 1a of the reaction vessel 1. The side wall portion 1a of the reaction vessel 1 has a dual structure composed of an inner wall and an outer wall. The cooler 10 can cool the reaction liquid 13a in the reaction vessel 1 by causing a cooling medium (hereafter, referred to as "coolant") to flow through the gap between the inner wall and the outer wall. The configuration of the cooler 10 is not limited to the configuration illustrated in Fig. 1. For example, the cooler 10 may be a heat exchanger disposed in the reaction vessel 1.

The liquid-surface sensor 11 is an example of a space maintainer, and can measure the amount of the reaction liquid 13a in the reaction vessel 1 by measuring the height of the gas-liquid interface 12 in the reaction vessel 1. For example, a float level sensor can be used as the liquid-surface sensor 11, but the liquid-surface sensor 11 is not limited to this. The liquid-surface sensor 11 is an optional element, and may be omitted.

The gas container 14 is an example of a gas supplier, and can supply an oxygen-containing gas into the reaction vessel 1. Air can be used as the oxygen-containing gas, but the oxygen-containing gas is not limited to this. For example, a gas having a higher oxygen concentration than air may be used as the oxygen-containing gas. In this case, it is possible to efficiently supply oxygen into the reaction vessel 1. The gas container 14 is connected to the space 13b in the reaction vessel 1 via the communication pipe 15.

The communication pipe 15 is inserted into a through-hole 5a (an example of a first through-hole) formed in the lid 5, and allows the space in the gas container 14 to communicate with the space 13b in the reaction vessel 1. Thus, the gas in the reaction vessel 1 and the gas in the gas container 14 can circulate. The gap between the lid 5 and the outer surface of the communication pipe 15 and the gap between the gas container 14 and the outer surface of the communication pipe 15 are each sealed with a sealing member (not shown) to keep the gastightness of the reaction vessel 1 and the gas container 14. A pipe and/or a tube can be used as the communication pipe 15, but the communication pipe 15 is not limited to these.

The communication pipe 15 may be inserted into, instead of the through-hole 5a formed in the lid 5, a through-hole formed in the side wall portion 1a of the reaction vessel 1. In this case, the through-hole, into which the communication pipe 15 is inserted, may be provided at a position higher than the upper limit height of the gas-liquid interface 12 in the reaction vessel 1. Thus, it is possible to supply the gas to the space 13b. Accordingly, it is possible to suppress foaming that occurs at the liquid surface (the gas-liquid interface 12) of the reaction liquid 13a further than in a case where the gas is supplied into the reaction liquid 13a, and it is possible to suppress adhesion of the reaction liquid 13a to the lid 5 and the like.

The upper limit height of the gas-liquid interface 12 may be predetermined so that the space 13b can reliably have a size that is necessary to supply oxygen to the reaction liquid 13a.

The communication pipe 15 is an optional element, and may be omitted. In this case, the gas container 14 may be attached, not via the communication pipe 15, but directly to the reaction vessel 1.

The on-off valve 16 is provided in the communication pipe 15, and can open and close the flow path in the communication pipe 15. An electromagnetic valve can be used as the on-off valve 16, but the on-off valve 16 is not limited to this. The on-off valve 16 may perform adjustment of the flow rate in the communication pipe 15. The on-off valve 16 is an optional element, and may be omitted.

The temperature sensor 17 is set in the reaction vessel 1, and can detect the temperature of the reaction liquid 13a in the reaction vessel 1. For example, a thermocouple can be used as the temperature sensor 17, but the temperature sensor 17 is not limited to this. The temperature sensor 17 is an optional element, and may be omitted.

The liquid discharger 18 is an example of a space maintainer, and can discharge the reaction liquid 13a from a through-hole formed in the bottom portion 1b of the reaction vessel 1. In the present embodiment, the liquid discharger 18 includes a liquid discharge pipe 18a and a liquid discharge valve 18b. The liquid discharger 18 may further includes a liquid discharge pump (not shown). The liquid discharge pipe 18a is inserted into the through-hole formed in the bottom portion 1b of the reaction vessel 1. A pipe and/or a tube may be used as the liquid discharge pipe 18a, but the liquid discharge pipe 18a is not limited to these. The liquid discharge valve 18b is provided in the liquid discharge pipe 18a, and can open and close the flow path in the liquid discharge pipe 18a. An electromagnetic valve can be used as the liquid discharge valve 18b, but the liquid discharge valve 18b is not limited to this.

The liquid discharge pipe 18a is an optional element, and may be omitted. In this case, the liquid discharge valve 18b may be directly attached to the reaction vessel 1. Not only the liquid discharge pipe 18a but also the liquid discharge valve 18b may be omitted. That is, the liquid discharger 18 may be omitted. In this case, for example, an operator may open the lid 5 and draw the reaction liquid 13a from the opening of the reaction vessel 1 to discharge the reaction liquid 13a from the reaction vessel 1.

The controller 19 includes an electronic circuit. The controller 19 may include a processor and a memory that stores instructions. In this case, the processor functions as the controller 19 when an instruction is executed.

The controller 19 can control the stirrer 2, the light source 8, the cooler 10, the on-off valve 16, and the liquid discharger 18 based on input signals from the liquid-surface sensor 11 and the temperature sensor 17. To be specific, the controller 19 causes the liquid discharger 18 to discharge the reaction liquid 13a so that the height of the gas-liquid interface 12 detected by the liquid-surface sensor 11 does not exceed a predetermined upper limit height. Moreover, the controller 19 causes the cooler 10 to cool the reaction liquid 13a so that the temperature detected by the temperature sensor 17 coincides with a predetermined temperature. The controller 19 includes a timer for measuring the light irradiation time of the light source 8, and, when the light irradiation time measured by the timer reaches a predetermined time, stops light irradiation by the light source 8 and further stops stirring by the stirrer 2 and cooling by the cooler 10. The controller 19 is an optional element, and may be omitted.

In the food processing apparatus 100 configured as described above, the inside of the reaction vessel 1 is controllably gastight. That is, the food processing apparatus 100 can set a state (hereafter, referred to as "gastight state") in which the gas outside of the food processing apparatus 100 (hereafter, referred to as "outside gas") cannot flow into the reaction vessel 1 and the space communicating with the reaction vessel 1 (in the present embodiment, the space in the gas container 14 and the communication pipe 15). The term "controllably gastight" means, in addition to being constantly maintained to be in a gastight state, being controllable to be in a gastight state and a non-gastight state.

### [1-2. Method of Operating Food Processing Apparatus 100]

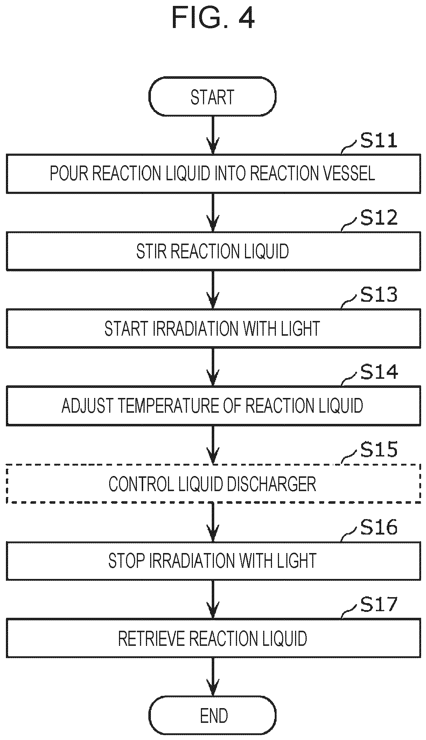

Next, a method of operating the food processing apparatus 100 will be described with reference to Fig. 4. Fig. 4 is a flowchart of the method of operating the food processing apparatus 100 according to the present embodiment.

First, the reaction liquid 13a is poured into the reaction vessel 1 (S11). At this time, the reaction liquid 13a is poured into the reaction vessel 1 so that the gas-liquid interface 12 does not exceed a predetermined upper limit height. Thus, it is possible to reliably provide a sufficient space 13b in the reaction vessel 1.

For example, when the reaction liquid 13a is automatically poured into the reaction vessel 1 by using a pump or the like, the pump is controlled based on the amount of the reaction liquid 13a measured by the liquid-surface sensor 11. For example, when the reaction liquid 13a is manually poured by an operator, the amount of the reaction liquid 13a measured by the liquid-surface sensor 11 may be displayed.

Next, the controller 19 activates the stirrer 2 to stir the reaction liquid 13a (S12). Thus, it is possible to improve contact between the reaction liquid 13a and the reaction pipe 7 and to improve reactivity.

Next, the controller 19 causes the light source 8 of the catalytic reactor 6 to emit light, and starts light irradiation of the thin-film layer 9 of the photocatalyst from the inside toward the outside of the reaction pipe 7 (S13). Light irradiation of the thin-film layer 9 of the photocatalyst generates excitons in the thin-film layer 9. The generated excitons react with dissolved oxygen and/or water molecules in the reaction liquid 13a to generate radicals. Due to the radicals and excitons generated in this way, reaction of an organic component of the material is promoted in the vicinity of the thin-film layer 9 of the photocatalyst, and the reforming reaction of the material progresses.

The controller 19 supplies a coolant to the cooler 10 (S14). The controller 19 detects the temperature of the reaction liquid 13a by using the temperature sensor 17, and adjusts the temperature and/or the supply amount of the coolant so that the temperature of the reaction liquid 13a becomes a predetermined temperature. Adjustment of the temperature and/or the supply amount of the coolant can be performed by using, for example, a constant-temperature-water circulation device (not shown) or the like. Thus, it is possible to reduce the effect of heat on the catalytic reactor 6 and the reaction liquid 13a due to heat generation by the light source 8.

For example, when a beer material is to be reformed, the material may be aged at a low temperature (for example, about 5°C). Accordingly, the controller 19 controls the cooler 10 so that the temperature of the reaction liquid 13a becomes 5°C.

Moreover, the controller 19 controls the liquid discharger 18 so that the gas-liquid interface 12 does not exceed the upper limit height because of increase of the reaction liquid 13a due to condensation (S15). The present step is an optional step, and may be omitted. Steps S12 to S15 need not be performed in this order, and may be performed in a different order. Steps S12 to S15 may be performed simultaneously.

When a predetermined time elapses after light irradiation by the light source 8 was started, the controller 19 stops stirring by the stirrer 2, light irradiation by the light source 8, and cooling by the cooler 10 (S16). In this way, by continuing stirring, light irradiation, and cooling for only a predetermined time, the food processing apparatus 100 can efficiently reform the material by irradiation of the photocatalyst with light.

After finishing step S16, the controller 19 opens the liquid discharge valve 18b of the liquid discharger 18 to retrieve the reaction liquid 13a from the reaction vessel 1 (S17), and finishes food processing through a series of reforming reactions.

### [1-3. Advantageous Effects and Others]

In the present embodiment, the reaction liquid 13a is cooled to a temperature lower than the temperature of outside gas. In particular, due to heat generation at the light source 8 in the reaction vessel 1 and cooling at the side wall portion 1a in the reaction vessel 1, a temperature distribution such that the temperature increases from the side wall portion 1a toward the center occurs in the reaction vessel 1. Accordingly, if the opening of the reaction vessel 1 is not closed by the lid 5, a flow such that outside gas circulates to the space 13b in the reaction vessel 1 is generated. If outside gas having a high humidity flows into the reaction vessel 1, condensation occurs in the reaction vessel 1 and water becomes mixed in the reaction liquid 13a, and the reforming reaction of the reaction liquid 13a may be affected. To suppress this, in the food processing apparatus 100 according to the present embodiment, the reaction vessel 1 is controllably gastight. With this configuration, it is possible to suppress condensation in the reaction vessel 1 due to flow of outside gas thereinto and to suppress reduction of quality that may occur due to mixing of water into the reaction liquid 13a. On the other hand, when the flow of outside gas into the reaction vessel 1 is suppressed, dissolved oxygen in the reaction liquid 13a that is necessary for the reform reaction of the material by using the photocatalyst decreases. In the reaction vessel 1, oxygen in the space 13b dissolves into the reaction liquid 13a through the gas-liquid interface 12, but the dissolved oxygen is consumed in the reforming reaction. Accordingly, when the flow of outside gas into the reaction vessel 1 is suppressed, oxygen in the space 13b decreases as the reaction time elapses and dissolved oxygen in the reaction liquid 13a also decreases. As a result, the reforming reactivity of the photocatalyst is reduced. To prevent this, in the food processing apparatus 100 according to the present embodiment, the gas container 14, which accommodates an oxygen-containing gas, communicates with the space 13b in the reaction vessel 1. Thus, when the oxygen concentration in the space 13b decreases, oxygen in the gas container 14 diffuses into the space 13b of the reaction vessel 1, and it is possible to supplement oxygen necessary for the photocatalyst. At this time, since the gas that flows into the reaction vessel 1 is limited to the gas in the gas container 14, it is possible to considerably suppress condensation in the reaction vessel 1, compared with a case where the flow of outside gas into the reaction vessel 1 is not suppressed.

The gas container 14 may have any capacity that can reliably provide an amount of oxygen necessary for the reforming reaction of the photocatalyst. However, since dissolution of oxygen follows Henry's law, when the oxygen concentration at the gas-liquid interface 12 between the space 13b and the reaction liquid 13a decreases, the amount of dissolved oxygen in the reaction liquid 13a decreases and the progress of the photocatalyst reaction is affected. Accordingly, the volume of the gas container 14 may have an allowance in consideration of the reaction time, which is the operation time. The upper limit of the amount of oxygen consumed by the photocatalyst depends on excitons generated in the photocatalyst used in the catalytic reactor 6. In practice, since not all of the generated excitons react with oxygen, the amount of oxygen to be consumed in the reaction vessel 1 is measured beforehand, and the capacity of the gas container 14 is determined based on the measured amount of oxygen. To be specific, it is possible to grasp the amount of oxygen to be consumed in the reaction by connecting the gas container 14 having any appropriate capacity to the reaction vessel 1, performing a food processing operation by using the food processing apparatus 100, and estimating a change of the oxygen concentration in the space 13b beforehand; and it is possible to obtain an intrinsically necessary gas capacity from excess or deficiency of oxygen in the gas container 14 having the any appropriate capacity.

The gas with which the gas container 14 is to be filled may be any oxygen-containing gas, which preferably has an oxygen concentration higher than that of air. To suppress condensation in the reaction vessel 1, the gas container 14 may be filled with air that has been dehumidified beforehand.

### (Second Embodiment)

Next, a second embodiment will be described. A food processing apparatus 200 according to the present embodiment mainly differs from the food processing apparatus 100 according to the first embodiment in that the food processing apparatus 200 includes an air pump, instead of a gas container, as a gas supplier. Hereafter, the present embodiment will be described with a focus on the difference from the first embodiment with reference to the drawings.

### [2-1. Configuration of Food Processing Apparatus 200]

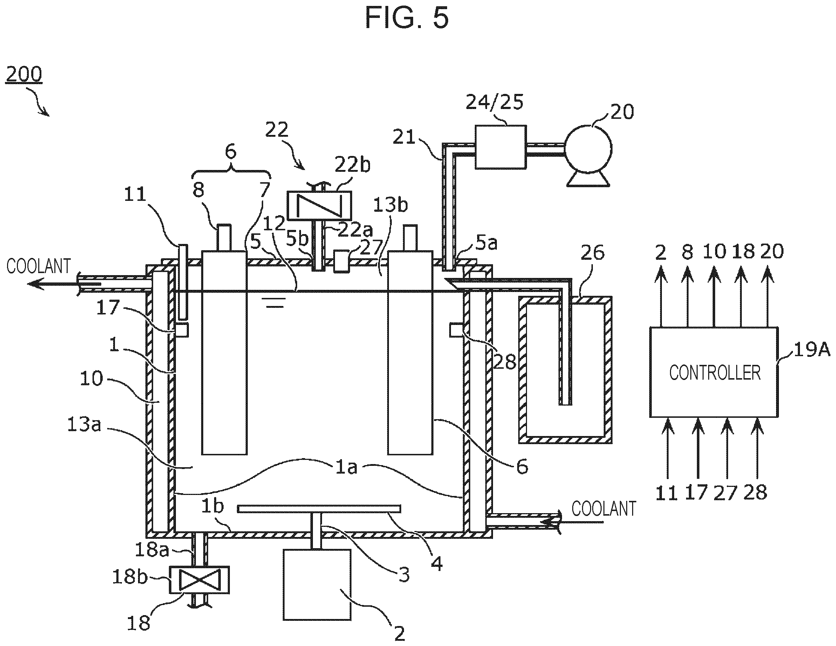

First, referring to Fig. 5, the food processing apparatus 200 according to the present embodiment will be described. Fig. 5 is a sectional view of the food processing apparatus 200 according to the present embodiment. As illustrated in Fig. 5, the food processing apparatus 200 according to the present embodiment includes the reaction vessel 1, the stirrer 2, the lid 5, the catalytic reactors 6, the cooler 10, the liquid-surface sensor 11, the temperature sensor 17, the liquid discharger 18, a controller 19A, an air pump 20, a gas discharger 22, a dehumidifier 24, a temperature adjuster 25, a drain 26, an oxygen concentration meter 27, and a dissolved oxygen meter 28. Hereafter, elements that differ from those of the food processing apparatus 100 according to the first embodiment will be mainly described.

The air pump 20 is an example of a gas supplier, and can supply an oxygen-containing gas into the reaction vessel 1. In the present embodiment, the air pump 20 supplies the gas to the space 13b in the reaction vessel 1 via a gas supply pipe 21, the dehumidifier 24, and the temperature adjuster 25. As in the first embodiment, the oxygen-containing gas is not limited to air.

The gas supply pipe 21 is inserted into the through-hole 5a formed in the lid 5, and the air pump 20 is connected to the reaction vessel 1. The gap between the outer surface of the gas supply pipe 21 and the lid 5 is sealed with a sealing member (not shown) to keep the gastightness of the space 13b in the reaction vessel 1. A pipe and/or a tube can be used as the gas supply pipe 21, but the gas supply pipe 21 is not limited to these. The gas supply pipe 21 is an optional element, and may be omitted. In this case, the air pump 20 may be directly connected to the reaction vessel 1. The gas supply pipe 21 may be inserted into, instead of the through-hole 5a formed in the lid 5, a through-hole formed in the side wall portion 1a of the reaction vessel 1. In this case, the through-hole into which the gas supply pipe 21 is inserted may be provided at a position higher than the upper limit height of the gas-liquid interface 12 in the reaction vessel 1.

The gas discharger 22 can discharge the gas in the reaction vessel 1 to the outside of the reaction vessel 1 via a through-hole 5b (an example of a second through-hole) formed in the lid 5 of the reaction vessel 1. To be specific, the gas discharger 22 discharges the gas in the space 13b when the gas is supplied by the air pump 20 into the reaction vessel 1 and the gas pressure in the space 13b increases. Thus, the gas pressure in the space 13b in the reaction vessel 1 is maintained to be higher than that in an environment around the food processing apparatus 200. That is, a positive pressure is maintained in the reaction vessel 1. Thus, it is possible to suppress flow of outside gas, other than the gas supplied by the air pump 20, into the reaction vessel 1.

As illustrated in Fig. 5, the gas discharger 22 includes a gas discharge pipe 22a and a check valve 22b. The gas discharge pipe 22a is inserted into the through-hole 5b. The gap between the outer surface of the gas discharge pipe 22a and the lid 5 is sealed with a sealing member (not shown) to keep the gastightness of the space 13b in the reaction vessel 1. A pipe and/or tube can be used as the gas discharge pipe 22a, but the gas discharge pipe 22a is not limited to these. The gas discharge pipe 22a is an optional element, and may be omitted. In this case, the check valve 22b may be directly attached to the through-hole 5b of the lid 5. The gas discharge pipe 22a may be inserted into, instead of the through-hole 5b formed in the lid 5, a through-hole formed in the side wall portion 1a of the reaction vessel 1. In this case, the through-hole into which the gas discharge pipe 22a is inserted may be provided at a position higher than the upper limit height of the gas-liquid interface 12 in the reaction vessel 1.

The check valve 22b is provided in the gas discharge pipe 22a, and can allow a gas to flow in only one direction from the inside of the reaction vessel 1 to the outside of the reaction vessel 1. That is, the check valve 22b shuts off flow of the gas into the reaction vessel 1 from the outside of the reaction vessel 1. On the other hand, when the difference between the gas pressure in the reaction vessel 1 and the gas pressure outside of the reaction vessel 1 exceeds an opening pressure, the gas flows from the inside of the reaction vessel 1 to the outside of the reaction vessel 1. That is, when the air pump 20 supplies the gas into the reaction vessel 1 and the difference between the pressure of the gas in the space 13b and the pressure of the gas outside of the reaction vessel 1 exceeds the opening pressure, the gas in the space 13b is discharged to the outside of the reaction vessel 1 via the check valve 22b.

The configuration of the gas discharger 22 is not limited to the configuration illustrated in Fig. 5. For example, the gas discharger 22 may include an on-off valve instead of the check valve 22b. In this case, the on-off valve may be actively controlled in accordance with the pressure of the gas in the space 13b.

The dehumidifier 24 can dehumidify the gas supplied from the air pump 20. In the present embodiment, the dehumidifier 24 is provided in the gas supply pipe 21, and dehumidifies the gas that passes through the gas supply pipe 21. A desiccant can be used as the dehumidifier 24. As the desiccant, a physical absorption agent such as silica gel, zeolite, or the like and/or a chemical absorption agent such as calcium oxide can be used, but the desiccant is not limited to this. Since the gas supplied from the air pump 20 is dehumidified by the dehumidifier 24, it is possible to suppress condensation in the reaction vessel 1. The dehumidifier 24 is an optional element, and may be omitted.

The temperature adjuster 25 can measure the temperature of the gas supplied from the air pump 20. In the present embodiment, the temperature adjuster 25 is provided in the gas supply pipe 21, and adjusts the temperature of the gas that passes through the gas supply pipe 21. For example, when the temperature of the reaction liquid 13a is lower than the temperature of outside gas, the temperature adjuster 25 may cool the gas supplied from the air pump 20. Thus, it is possible to suppress increase of the temperature of the reaction liquid 13a due to the gas supplied from the air pump 20. Moreover, it is possible to reduce moisture in the gas by cooling the gas and to suppress condensation in the reaction vessel 1. The temperature adjuster 25 is an optional element, and may be omitted.

The drain 26 is a lead pipe and a container that allow the reaction liquid 13a to flow to the outside of the reaction vessel 1 when the liquid surface (the gas-liquid interface 12) of the reaction liquid 13a in the reaction vessel 1 exceeds the upper limit height. The drain 26 discharges the reaction liquid 13a from the reaction vessel 1 via a through-hole formed in the side wall portion 1a of the reaction vessel 1. The height of the through-hole at which the drain 26 is provided coincides with the upper limit height of the gas-liquid interface 12. Thus, the reaction liquid 13a exceeding the gas-liquid interface 12 flows to the outside of the reaction vessel 1 via the drain 26. Accordingly, even when condensation in the reaction vessel 1 increases due to deterioration of the sealing performance or the like, it is possible to reliably provide the space 13b in the reaction vessel 1. The gap between the outer surface of the drain 26 and the side wall portion 1a of the reaction vessel 1 is sealed with a sealing member (not shown) to keep the gastightness of the space 13b in the reaction vessel 1. The drain 26 is an optional element, and may be omitted.

The oxygen concentration meter 27 can measure the oxygen concentration in the space 13b in the reaction vessel 1. The oxygen concentration meter 27 is set on the side wall portion 1a of the reaction vessel 1 or on the lid 5, and is disposed at a position higher the upper limit height of the gas-liquid interface 12. For example, a zirconia oxygen concentration meter, a magnetic oxygen concentration meter, a galvanic-cell oxygen concentration meter, or the like can be used as the oxygen concentration meter 27, but the oxygen concentration meter 27 is not limited to these. The oxygen concentration meter 27 is an optional element, and may be omitted.

The dissolved oxygen meter 28 can measure the concentration of oxygen dissolved in the reaction liquid 13a in the reaction vessel 1. The dissolved oxygen meter 28 is provided on the side wall portion 1a of the reaction vessel 1 or on the bottom portion 1b, and is disposed at a position lower than the upper limit height of the gas-liquid interface 12. The dissolved oxygen meter 28 can measure dissolved oxygen by using, for example, a diaphragm electrode method, but the method is not limited to this. The dissolved oxygen meter 28 is an optional element, and may be omitted.

The controller 19A includes an electronic circuit. As with the controller 19 in the first embodiment, the controller 19A may include a processor and a memory that stores instructions.

The controller 19A can control the stirrer 2, the light source 8, the cooler 10, the liquid discharger 18, and the air pump 20 based on input signals from the liquid-surface sensor 11, the temperature sensor 17, the oxygen concentration meter 27, and the dissolved oxygen meter 28. To be specific, as with the controller 19 in the first embodiment, the controller 19A can control the stirrer 2, the light source 8, the cooler 10, and the liquid discharger 18. In the present embodiment, the controller 19A can further control the air pump 20. To be specific, the controller 19A can control the amount and the flow rate of the gas supplied from the air pump 20 into the reaction vessel 1.

The controller 19A causes the air pump 20 to supply the gas so that the oxygen concentration measured by the oxygen concentration meter 27 exceeds a predetermined oxygen concentration. Thus, oxygen necessary for the reaction of the reaction liquid 13a is reliably provided in the reaction vessel 1, and the reactivity can be improved. As the predetermined oxygen concentration, a concentration that has been empirically and/or experimentally determined to reliably provide oxygen necessary for the reaction of the reaction liquid 13a may be used.

The controller 19A causes the air pump 20 to supply the gas so that the dissolved oxygen concentration measured by the dissolved oxygen meter 28 exceeds a predetermined dissolved oxygen concentration. Thus, oxygen necessary for the reaction of the reaction liquid 13a is reliably provided in the reaction vessel 1, and the reactivity can be improved. As the predetermined dissolved oxygen concentration, a concentration that has been empirically and/or experimentally determined, within a range that does not negatively affect the reaction, to reliably provide oxygen necessary for the reaction of the reaction liquid 13a may be used.

The controller 19A supplies the gas to the air pump 20 when the height of the liquid surface detected by the liquid-surface sensor 11 exceeds a predetermined liquid surface height. Thus, even when condensation in the reaction vessel 1 increases due to deterioration of the sealing performance or the like, it is possible to reliably provide the space 13b in the reaction vessel 1. The controller 19A is an optional element, and may be omitted.

In the food processing apparatus 200 configured as described above, the inside of the reaction vessel 1 is controllably gastight. That is, the food processing apparatus 200 can set a state (hereafter, referred to as "gastight state") in which the gas outside of the food processing apparatus 200 cannot flow into the reaction vessel 1 and the space communicating with the reaction vessel 1 (in the present embodiment, the space in the gas supply pipe 21, the gas discharge pipe 22a, and the drain 26). In the present embodiment, the gastight state and a non-gastight state (a state in which the gas flows in from the air pump 20 and the gas flows out from the check valve 22b) are controlled.

### [2-2. Method of Operating Food Processing Apparatus 200]

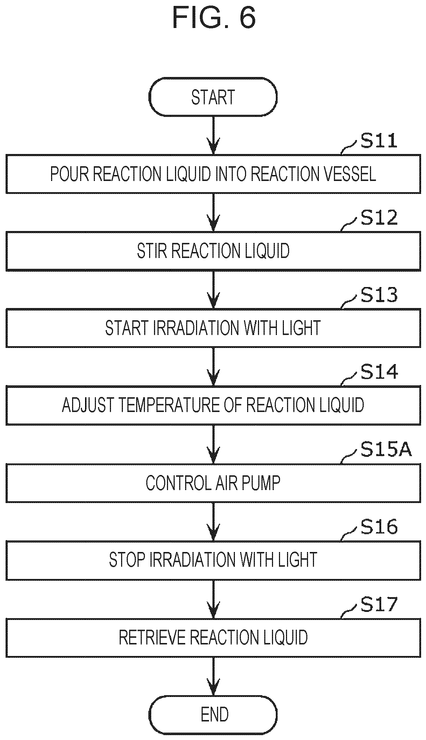

Next, a method of operating the food processing apparatus 200 will be described with reference to Fig. 6. Fig. 6 is a flowchart of a method of operating the food processing apparatus 200 according to the present embodiment.

Descriptions of steps S11 to S14, which are the same as those of the first embodiment, will be omitted. In a state in which the thin-film layer 9 of the photocatalyst is irradiated with light, the controller 19A controls the air pump 20 (S15A). To be specific, the controller 19A controls the amount and the flow rate of a gas to be supplied by the air pump 20 in order to suppress decrease of the oxygen concentration in the space 13b in the reaction vessel 1 while suppressing condensation in the reaction vessel 1. For example, the controller 19A causes the air pump 20 to supply the gas so that the dissolved oxygen concentration measured by the dissolved oxygen meter 28 exceeds a predetermined dissolved oxygen concentration. For example, the controller 19A causes the air pump 20 to supply the gas so that the oxygen concentration measured by the oxygen concentration meter 27 exceeds a predetermined oxygen concentration. For example, the controller 19A supplies the gas to the air pump 20 when the height of the liquid surface detected by the liquid-surface sensor 11 exceeds a predetermined liquid surface height.

When a predetermined time elapses after light irradiation by the light source 8 was started, the controller 19A stops stirring by the stirrer 2, light irradiation by the light source 8, cooling by the cooler 10, and supply of the gas by the air pump 20 (S16). Then, the controller 19A opens the liquid discharge valve 18b of the liquid discharger 18 to retrieve the reaction liquid 13a from the reaction vessel 1 (S17), and finishes food processing through a series of reforming reactions.

### [2-3. Advantageous Effects and Others]

As described above, the food processing apparatus 200 according to the present embodiment includes the air pump 20 and the gas discharger 22. Accordingly, the food processing apparatus 200 can control the amount and the flow rate of the gas supplied into the reaction vessel 1.

As a result, it is possible to make the amount of the gas supplied into the reaction vessel 1 by the air pump 20 coincide with an amount that is predetermined based on the time for which irradiation with light by the light source 8 is performed. The amount of the gas to be supplied by the air pump 20 may be determined based on an oxygen amount that is measured beforehand by measuring the amount of oxygen consumed in the reaction vessel 1 during the time for which irradiation with light by the light source 8 is performed. For example, the oxygen amount consumed in the reaction is estimated by operating the food processing apparatus 200 without activating the air pump 20 and by measuring a change in the oxygen concentration in the space 13b beforehand. A gas amount that is necessary is obtained from the estimated oxygen amount and the reactivity of the reaction liquid 13a. Since the amount of the gas to be supplied can be controlled by using the air pump 20, it is possible to supply oxygen necessary for the reaction while suppressing the condensation amount in the reaction vessel 1.

The rate at which oxygen dissolves into the reaction liquid 13a from the space 13b is proportional to the rate at which oxygen is consumed by the reaction. Accordingly, even if the gas is suppled at a rate higher than the rate at which oxygen is consumed in the reaction, the gas is discharged before oxygen included in the supplied gas dissolves into the reaction liquid 13a. Accordingly, the air pump 20 may cause the air pump 20 to supply the gas so that the flow rate (the amount of the gas supplied per unit time) of the gas supplied by the air pump 20 into the reaction vessel 1 coincides with a predetermined flow rate. At this time, the controller 19A may cause the air pump 20 to operate continuously or may cause the air pump 20 to operate intermittently. Thus, supply of unnecessary gas is suppressed, and it is possible to suppress increase of condensation due to the gas supplied from the air pump 20.

The oxygen consumption in the reforming reaction of the reaction liquid 13a varies depending on the type of the photocatalyst, the intensity of light emitted from the light source 8, the type of the reaction liquid 13a, and the temperature of the reaction liquid 13a. When the amount of the gas supplied from the air pump 20 is large, condensation in the reaction vessel 1 increases. On the other hand, when the amount of the gas supplied from the air pump 20 is small, the progress of the reforming reaction is hindered.

With the food processing apparatus 200 according to the present embodiment, the gas is supplied from the air pump 20 into the space 13b so that the oxygen concentration in the space 13b exceeds a predetermined oxygen concentration. Thus, the oxygen concentration in the space 13b is maintained. Therefore, a sufficient amount of oxygen dissolves into the reaction liquid 13a through the gas-liquid interface 12 in accordance with Henry's law, and the reforming reactivity is maintained.

With the food processing apparatus 200 according to the present embodiment, the gas is supplied from the air pump 20 into the space 13b so that the dissolved oxygen concentration in the reaction liquid 13a exceeds a predetermined dissolved oxygen concentration. The dissolved oxygen concentration in the reaction liquid 13a is proportional to the oxygen concentration in the space 13b in accordance with Henry's law. That is, since the oxygen concentration in the space 13b is maintained, the amount of oxygen that dissolves through the gas-liquid interface 12 is large, and the reforming reactivity is maintained.

### (Third Embodiment)

Next, a third embodiment will be described. A food processing apparatus 300 according to the present embodiment differs from the food processing apparatus 100 according to the first embodiment in that the food processing apparatus 300 does not include a gas supplier.

### [3-1. Configuration of Food Processing Apparatus 300]

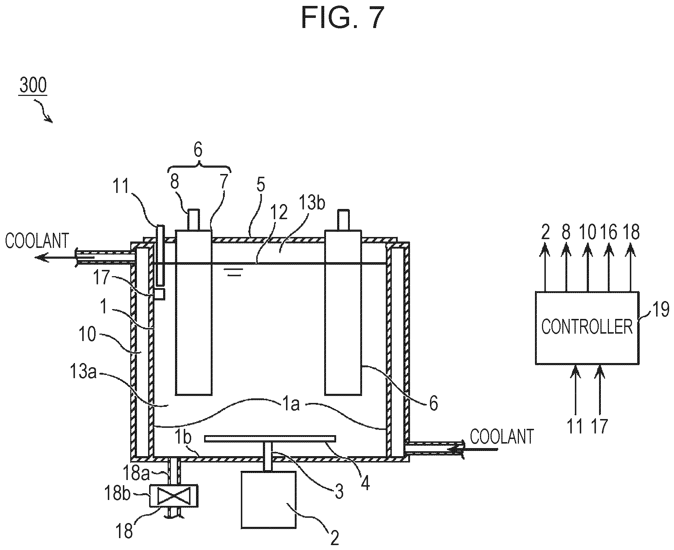

As illustrated in Fig. 7, the food processing apparatus 300 includes the reaction vessel 1, the stirrer 2, the lid 5, the catalytic reactors 6, the cooler 10, the liquid-surface sensor 11, the temperature sensor 17, the liquid discharger 18, and the controller 19.

### [3-2. Method of Operating Food Processing Apparatus 300]

A method of operating the food processing apparatus 300 is basically similar to the method of operating the food processing apparatus 100 according to the first embodiment, but the operation is performed while a space (13b), in which an oxygen-containing gas is present, is formed between the lid and the reactant.

### [3-3. Advantageous Effects and Others]

With the method of operating the food processing apparatus 300, it is possible to supply oxygen necessary for the reaction while suppressing the amount of condensation in the reaction vessel 1.

### (Other Embodiments)

Heretofore, food processing apparatuses according to an aspect of the present disclosure and methods of operating thereof have been described based on embodiments. However, a food processing apparatus according to the present disclosure and a method of operating thereof are not limited to those of the embodiments described above. Other embodiments realized by combining any elements in the embodiments described above and modified embodiments that are obtained from the embodiments by making modifications that are conceivable by persons having ordinary skill in the art within the scope of the present disclosure are also included in the present disclosure.

For example, in the second embodiment, the food processing apparatus 200 may include, instead of the air pump 20, a gas container 14 that contains a gas having a pressure higher than the atmospheric pressure.

### Industrial Applicability

An aspect of the present disclosure is applicable to, for example, a food processing apparatus using a photocatalyst that reforms a food material and a method of operating a food processing apparatus.

### Reference Signs List

1 reaction vessel
1a side wall portion
1b bottom portion
2 stirrer
3 rotation shaft
4 impeller
5 lid
5a, 5b through-hole
6 catalytic reactor
7 reaction pipe
8 light source
9 thin-film layer
10 cooler
11 liquid-surface sensor
12 gas-liquid interface
13a reactant
13b space
14 gas container
15 communication pipe
16 on-off valve
17 temperature sensor
18 liquid discharger
18a liquid discharge pipe
18b liquid discharge valve
19, 19A controller
20 air pump
21 gas supply pipe
22 gas discharger
22a gas discharge pipe
22b check valve
24 dehumidifier
25 temperature adjuster
26 drain
27 oxygen concentration meter
28 dissolved oxygen meter
100, 200, 300 food processing apparatus

## Claims

1. A food processing apparatus comprising:
a reaction vessel that has a tubular shape with a bottom and contains a reactant that is liquid and to be used for food;
a reactor that is disposed in the reaction vessel and provided with a photocatalyst;
a light source that irradiates the photocatalyst with light;
a cooler that cools the reactant in the reaction vessel;
a lid that closes an opening of the reaction vessel; and
a gas supplier that supplies an oxygen-containing gas into the reaction vessel via a first through-hole formed in the lid or in a part of a side wall portion of the reaction vessel in a vicinity of the lid,
wherein an inside of the reaction vessel is controllably gastight.

2. The food processing apparatus according to claim 1,
wherein the gas supplier includes a gas container that communicates with the reaction vessel via the first through-hole.

3. The food processing apparatus according to claim 2,
wherein the gas supplier further includes a communication pipe that is inserted into the first through-hole and through which the gas container and the reaction vessel communicate.

4. The food processing apparatus according to claim 3,
wherein the gas supplier further includes a valve that is provided in the communication pipe.

5. The food processing apparatus according to claim 1,
wherein the gas supplier includes an air pump that supplies the gas into the reaction vessel via the first through-hole, and
wherein the food processing apparatus further comprises a gas discharger that is capable of discharging a gas in the reaction vessel via a second through-hole formed in the lid or in the side wall portion of the reaction vessel.

6. The food processing apparatus according to claim 5,
wherein the air pump maintains a gas pressure in a space in the reaction vessel to be higher than an atmospheric pressure by supplying the gas into the reaction vessel.

7. The food processing apparatus according to claim 6,
wherein the gas discharger includes a check valve that restricts flow or air into the reaction vessel.

8. The food processing apparatus according to any one of claims 5 to 7, further comprising:
a dehumidifier that dehumidifies the gas supplied from the air pump.

9. The food processing apparatus according to any one of claims 5 to 8, further comprising:
a temperature adjuster that adjusts a temperature of the gas supplied by the air pump.

10. The food processing apparatus according to any one of claims 5 to 9,
wherein an amount of the gas supplied by the air pump into the reaction vessel coincides with an amount that is predetermined based on a time for which irradiation with light is performed by the light source.

11. The food processing apparatus according to any one of claims 5 to 9,
wherein a flow rate of the gas supplied by the air pump into the reaction vessel is constant.

12. The food processing apparatus according to any one of claims 5 to 9, further comprising:
a controller that controls the air pump; and
a dissolved oxygen meter that measures a dissolved oxygen concentration in the reactant,
wherein the controller causes the air pump to supply the gas so that the dissolved oxygen concentration measured by the dissolved oxygen meter exceeds a predetermined dissolved oxygen concentration.

13. The food processing apparatus according to any one of claims 5 to 9, further comprising:
a controller that controls the air pump, and
an oxygen concentration meter that measures an oxygen concentration in a space in the reaction vessel,
wherein the controller causes the air pump to supply the gas so that the oxygen concentration measured by the oxygen concentration meter exceeds a predetermined oxygen concentration.

14. The food processing apparatus according to any one of claims 5 to 9, further comprising:
a liquid-surface sensor that is provided in the reaction vessel and detects a height of a liquid surface of the reactant,
wherein the air pump supplies the gas into the reaction vessel when the height of the liquid surface detected by the liquid-surface sensor exceeds a predetermined liquid surface height.

15. The food processing apparatus according to any one of claims 5 to 14,
wherein the air pump stops supply of the gas when emission of light by the light source is stopped.

16. The food processing apparatus according to any one of claims 1 to 15, further comprising:
a space maintainer that maintains a space in the reaction vessel by adjusting an amount of the reactant in the reaction vessel.

17. The food processing apparatus according to claim 16,
wherein the space maintainer includes
a liquid-surface sensor that is provided in the reaction vessel and detects a height of a liquid surface of the reactant,
a liquid discharger that discharges the reactant in the reaction vessel, and
a controller that controls the liquid discharger, and
wherein the controller causes the liquid discharger to discharge the reactant so that the height of the liquid surface detected by the liquid-surface sensor does not exceed a predetermined upper limit height.

18. The food processing apparatus according to claim 16,
wherein the space maintainer includes
a drain that is provided at a height of the side wall portion of the reaction vessel corresponding to an upper limit height of a liquid surface of the reactant and discharges the reactant exceeding the upper limit height.

19. A method of operating a food processing apparatus,
the food processing apparatus including
a reaction vessel that has a tubular shape with a bottom and contains a reactant that is liquid and to be used for food,
a reactor that is disposed in the reaction vessel and provided with a photocatalyst,
a light source that irradiates the photocatalyst with light,
a cooler that cools the reactant in the reaction vessel,
a lid that closes an opening of the reaction vessel, and
a gas supplier that supplies an oxygen-containing gas into the reaction vessel via a first through-hole formed in the lid or in a part of a side wall portion of the reaction vessel in a vicinity of the lid,
wherein an inside of the reaction vessel is controllably gastight,
the method comprising:
causing the gas supplier to supply the gas into a space formed in the reaction vessel between the lid and a liquid surface of the reactant when the photocatalyst is irradiated with light by the light source.

20. A method of operating a food processing apparatus,
the food processing apparatus including
a reaction vessel that has a tubular shape with a bottom and contains a reactant that is liquid and to be used for food,
a reactor that is disposed in the reaction vessel and provided with a photocatalyst,
a light source that irradiates the photocatalyst with light,
a cooler that cools the reactant in the reaction vessel,
a lid that closes an opening of the reaction vessel, and
wherein an inside of the reaction vessel is controllably gastight,
the method comprising:
forming a space in which an oxygen-containing gas is present between the lid and a liquid surface of the reactant.
